# EUROPÄISCHE PATENTANMELDUNG

(11) **EP 1 614 590 A2**
(43) Veröffentlichungstag der Anmeldung: **11.01.2006**
(21) Anmeldenummer: 05014487.2
(22) Anmeldetag: 04.07.2005
(51) Int. Cl.: B60R 21/34

(54) **Karosseriehaube**

(30) Priorität: 06.07.2004 DE 102004032597
(71) Anmelder: Volkswagen Aktiengesellschaft, 38436 Wolfsburg (DE)
(72) Erfinder: Engel, Michael, 38518 Gifhorn (DE); Itzen, Günther, 26506 Norden (DE); Thomas, Udo, 67373 Dudenhofen (DE)

(57) **Zusammenfassung**

Die Erfindung betrifft eine Karosseriehaube, insbesondere Kraftfahrzeugfronthaube, welche wenigstens bereichsweise als Fußgängerschutz ausgelegt ist. Ein Bauraum unter der Karosseriehaube (11) kann besser genutzt werden, wenn ein elastischer Luftführungskanal (20) in einem für den Fußgängerschutz ausgelegten Bereich (16) unterhalb einer Deckhaut (15) angeordnet ist.

## Beschreibung

Die Erfindung betrifft eine Karosseriehaube, insbesondere eine Kraftfahrzeugfronthaube, gemäß dem Oberbegriff des Patentanspruchs 1.

Bei einer Fußgänger-Fahrzeug-Kollision, insbesondere bei einem Frontaufprall auf einen Fußgänger wird dieser an den Füßen meist ausgehebelt und schlägt mit Oberkörper und Kopf auf die Kraftfahrzeugfronthaube. Zum Schutz von Fußgängern bei einem Aufprall auf die Kraftfahrzeugfronthaube ist es bereits bekannt, einen mittleren Haubenwandbereich als einem potenziellen Aufschlagbereich eines Fußgängers nachgiebig und verformbar zu machen. In der DE A1-198 51 472 ist eine Kraftfahrzeugfronthaube beschrieben, die als Fußgängerschutz ausgelegt ist. Unterhalb der äußeren Haut der Kraftfahrzeughaube ist bei einem Aufprall energieabsorbierende Zwischenschicht angeordnet. Allerdings erfordert dies ein Freihalten von Bauteilen des für den Fußgängerschutz ausgelegten Bereichs unter der Karosseriehaube, was bei modernen Fahrzeugen, deren verfügbarer Bauraum mit verschiedensten Komponenten dicht gepackt ist, zu erheblichen Packagingproblemen führt.

Aufgabe der vorliegenden Erfindung ist es, eine Karosseriehaube, insbesondere eine Kraftfahrzeugfronthaube, welche wenigstens bereichsweise als Fußgängerschutz ausgelegt ist, so weiterzuentwickeln, dass der Bauraum unter der Karosseriehaube besser benutzt werden kann.

Die Aufgabe wird erfindungsgemäß mit den Merkmalen des Patentanspruchs 1 gelöst.

Bei einer erfindungsgemäßen Karosseriehaube, insbesondere einer Kraftfahrzeugfronthaube, welche wenigstens bereichsweise als Fußgängerschutz ausgelegt ist, ist ein elastischer Luftführungskanal in einem für den Fußgängerschutz ausgelegten Bereich unterhalb einer Deckhaut angeordnet mit dem Vorteil, dass ein bisher bauteilfreier Raum zwischen Karosseriehaube und Brennkraftmaschine, der eine ausreichende Verformung für einen für einen Aufprall erlaubt, für ein Funktionsbauteil nutzbar ist. Dadurch ist eine Verlegung eines zu kühlenden Bauteils, beispielsweise einem Ladeluftkühler, von seinem üblichen Einbauort, beispielsweise im Frontend, möglich, und es kann auf diese Weise ein günstigeres Packaging im Motorraum erreicht werden. Dringend benötigter Bauraum wird verfügbar gemacht. Dies gilt vorzugsweise auch dann, wenn der Luftführungskanal im Wesentlichen innerhalb eines für den Fußgängerschutz freizuhaltenden Volumens angeordnet ist. Dasselbe Volumen kann einerseits der Fußgängersicherheit und andererseits der Funktion des Fahrzeugs dienen. Fußgängerschutzfreiräume lassen sich vorteilhaft mit einem Funktionsbauteil kombinieren.

Es kann eine zusätzliche Unterstützung einer Struktur zum Fußgängerschutz bereitgestellt werden, wenn der Luftführungskanal wenigstens bereichsweise eine nach Fußgängerschutzrichtlinien ausgelegt weiche Wand aufweist.

In einer günstigen Ausgestaltung kann der Luftführungskanal in eine bei einem Aufprall energieabsorbierende Mehrschichtstruktur integriert sein. Der Luftführungskanal kann gleichzeitig nicht nur ein Funktionsbauteil zur Luftzuführung sein, sondern auch ein Funktionsbauteil für den Fußgängerschutz. Im Frontend ist ein ausreichend großer Querschnitt eines Lufteintrittsbereichs für Kühlluft vorgesehen, während entlang des Luftführungskanals dessen Querschnitt verjüngt sein kann, um in die Mehrschichtstruktur zu passen. Vorzugsweise ist der Luftführungskanal in seinem Luftaustrittsbereich mit einem an das zu kühlende Bauteil angepasst.

In einer bevorzugten Ausgestaltung ist der Luftführungskanal an einem vom Frontend entfernt angeordneten Ladeluftkühler angeschlossen. Bevorzugt überdeckt ein Luftaustrittsbereich des Luftführungskanals im Wesentlichen eine Kühlfläche des Ladeluftkühlers. Dadurch wird eine auseichende Luftzufuhr zum Ladeluftkühler ermöglicht. Der Ladeluftkühler ist üblicherweise häufig im Frontend angeordnet. Durch die erfindungsgemäße Luftkanalführung kann der Ladeluftkühler aus dem Crashbereich im Frontend in den Motorraum hinein versetzt und über der Brennkraftmaschine angeordnet werden, wobei im Frontendbereich eine bessere Bauraumausnutzung im Vorderwagen ermöglicht wird. Durch die Verlegung nach innen sind weiterhin Schäden und Kosten bei Unfällen verringert, so dass eine günstigere Kaskoklasse bei der Fahrzeugversicherung möglich ist. Durch die Verlegung ergibt sich zusätzlich ein Designvorteil durch eine mögliche Verkürzung eines vorderen Überhanges des Fahrzeugs.

Günstigerweise steht ein Luftaustrittsbereich gegenüber einer Lufteintrittsrichtung in etwa senkrecht. Damit kann die Luftzufuhr zu einem Ladeluftkühler in dessen Einbaulage über einer Brennkraftmaschine verbessert werden, da ein Verlust der aus dem Luftaustrittsbereich austretenden Luft vermieden werden kann.

Vorteilhaft weist der Luftführungskanal aus einem Kunststoff gebildete Wände auf. Günstigerweise ist der Luftführungskanal aus einem Elastomer gebildet.

Vorteilhafte Weiterbildungen der Erfindung sind in Unteransprüchen angegeben.

Weitere Ausbildungsformen und Aspekte der Erfindung werden unabhängig von einer Zusammenfassung in den Patentansprüchen ohne Beschränkung der Allgemeinheit im Folgenden anhand einer Zeichnung näher erläutert. Dabei zeigen
- Fig. 1: eine schematische Ansicht eines Vorderwagens eines Fahrzeugs mit einer bevorzugten als Fußgängerschutz ausgelegten Karosseriehaube;
- Fig. 2: eine schematische Ansicht des Vorderwagens aus Figur 1 mit einem bevorzugten Luftführungskanal im Schnitt.

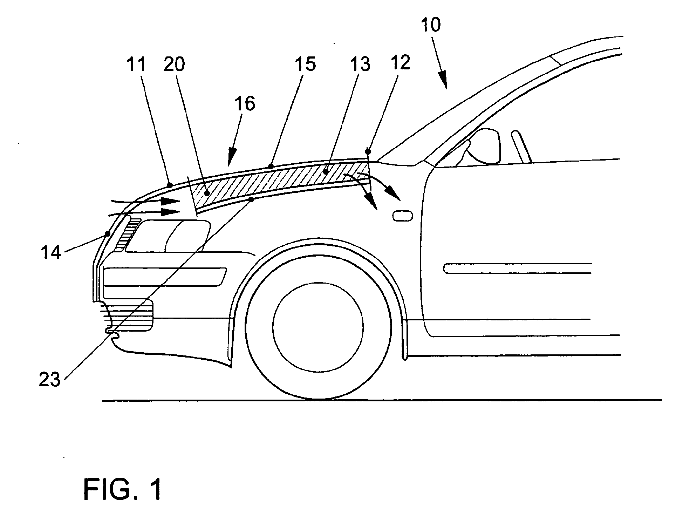

Figur 1 zeigt zur Veranschaulichung der Erfindung einen Vorderwagen eines Fahrzeugs 10 mit einem Bereich 16 seiner Karosseriehaube 11, der als Fußgängerschutz ausgelegt ist. Zwischen einem Frontend 14 des Vorderwagens und einem Haubenende 12 ist ein Volumen 13 angeordnet, welches bei einem Aufprall eines Fußgängers eine ausreichende Schutzfunktion für diesen gewährleisten muss. Typischerweise ist der Bereich 16 etwa einige Zentimeter dick und nimmt in seiner Länge eine wesentliche Länge der Kraftfahrzeugfronthaube vom Frontend 14 bis zum Haubenende 12 ein. Unterhalb einer Deckhaut 15 ist das Volumen 13 von Bauteilen freizuhalten, um einen Fußgängerschutz zu erreichen. Erfindungsgemäß ist in diesem Bereich ein elastischer Luftführungskanal 20 vorgesehen. Pfeile an dessen Lufteintritt und Luftaustritt kennzeichnen den Weg der Kühlluft im Luftführungskanal 20.

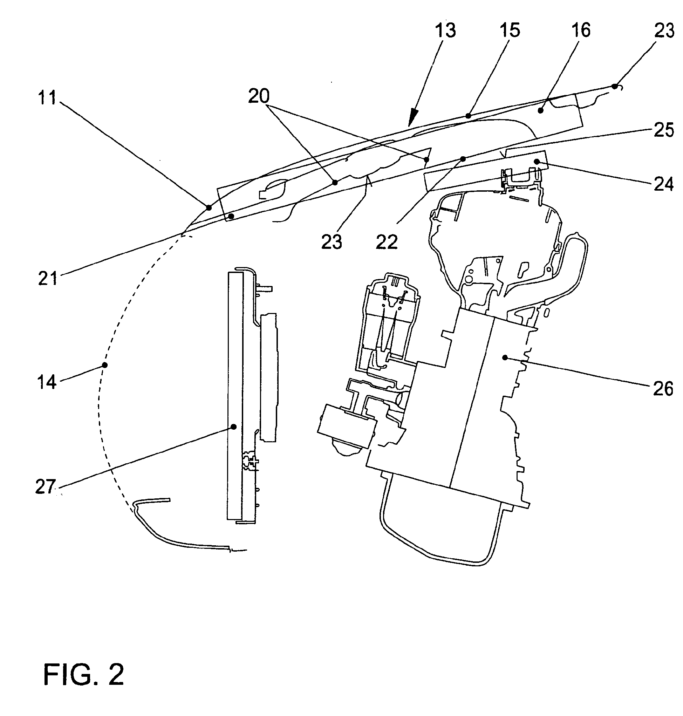

Die bevorzugte Ausgestaltung in Figur 2 zeigt einen Schnitt durch den schematisch wiedergegebenen Vorderwagen aus Figur 1. Innerhalb des Vorderwagens unterhalb der Karosseriehaube 11 ist ausgehend vom Frontend 14 ein Kühler 27 und eine Brennkraftmaschine 26 angeordnet. Über der Brennkraftmaschine 26 ist ein Ladeluftkühler 24 mit seiner Kühlfläche 25 angeordnet. Innerhalb des für den Fußgängerschutz ausgelegten Bereichs 16 ist ein elastischer Luftführungskanal 20 unterhalb einer Deckhaut 15 angeordnet. Der Luftführungskanal 20 ist im Wesentlichen innerhalb des für den Fußgängerschutz freizuhaltenden Volumens 13 angeordnet und weist wenigstens bereichsweise, insbesondere zumindest innerhalb des Volumens 13, eine nach Fußgängerschutzrichtlinien ausgelegt weiche Wand 23 auf. Die Wand 23 ist vorzugsweise aus Kunststoff und/oder aus einem Elastomer gebildet.

Der Luftführungskanal 20 ist an den Ladeluftkühler 24 eines nicht weiter bezeichneten Turboladers angeschlossen und ist nicht im Bereich des Frontends 14, sondern über der Brennkraftmaschine 26, insbesondere auf dem Motorblock, angeordnet. Ein Luftaustrittsbereich 22 des Luftführungskanals 20 überdeckt die Kühlfläche 25 des Ladeluftkühlers 24 möglichst vollständig, wobei ein Luftaustrittsbereich 22 gegenüber einer Lufteintrittsrichtung in etwa senkrecht steht. Damit ist die in einem Lufteintrittsbereich 21 eintretende Luft weitestgehend dem Ladeluftkühler 24 zuführbar.

Der Luftführungskanal 20 ist in einer günstigen Ausgestaltung in eine bei einem Aufprall energieabsorbierende Mehrschichtstruktur integriert. Günstigerweise kann die Mehrschichtstruktur geeignete parallele Kanalstrukturen aufweisen, die insgesamt als Luftführungskanal 20 wirken können.

## Patentansprüche

1. Karosseriehaube, insbesondere Kraftfahrzeugfronthaube, welche wenigstens bereichsweise als Fußgängerschutz ausgelegt ist, **dadurch gekennzeichnet, dass** ein elastischer Luftführungskanal (20) in einem für den Fußgängerschutz ausgelegten Bereich (16) unterhalb einer Deckhaut (15) angeordnet ist.

2. Karosseriehaube nach Anspruch 1, **dadurch gekennzeichnet, dass** der Luftführungskanal (20) im Wesentlichen innerhalb eines für den Fußgängerschutz freizuhaltenden Volumens (13) angeordnet ist.

3. Karosseriehaube nach Anspruch 1 oder 2, **dadurch gekennzeichnet, dass** der Luftführungskanal (20) wenigstens bereichsweise eine nach Fußgängerschutzrichtlinien ausgelegt weiche Wand (23) aufweist.

4. Karosseriehaube nach zumindest einem der vorhergehenden Ansprüche, **dadurch gekennzeichnet, dass** der Luftführungskanal (20) in eine bei einem Aufprall energieabsorbierende Mehrschichtstruktur integriert ist.

5. Karosseriehaube nach zumindest einem der vorhergehenden Ansprüche, **dadurch gekennzeichnet, dass** der Luftführungskanal (20) an einen Ladeluftkühler (24) angeschlossen ist.

6. Karosseriehaube nach Anspruch 5, **dadurch gekennzeichnet, dass** der Ladeluftkühler (24) über einer Brennkraftmaschine (26) angeordnet ist.

7. Karosseriehaube nach Anspruch 5 oder 6, **dadurch gekennzeichnet, dass** ein Luftaustrittsbereich (22) des Luftführungskanals (20) eine Kühlfläche (25) des Ladeluftkühlers (24) im Wesentlichen überdeckt.

8. Karosseriehaube nach zumindest einem der vorhergehenden Ansprüche, **dadurch gekennzeichnet, dass** ein Luftaustrittsbereich (22) gegenüber einer Lufteintrittsrichtung in etwa senkrecht steht.

9. Karosseriehaube nach zumindest einem der vorhergehenden Ansprüche, **dadurch gekennzeichnet, dass** der Luftführungskanal (21) wenigstens bereichsweise aus einem Kunststoff gebildete Wände (23) aufweist.

10. Karosseriehaube nach zumindest einem der vorhergehenden Ansprüche, **dadurch gekennzeichnet, dass** der Luftführungskanal (21) wenigstens bereichsweise aus einem Elastomer gebildete Wände (23) aufweist.
